# EUROPÄISCHE PATENTANMELDUNG

(11) **EP 1 473 608 A2**
(43) Veröffentlichungstag der Anmeldung: **03.11.2004**
(21) Anmeldenummer: 03026147.3
(22) Anmeldetag: 13.11.2003
(51) Int. Cl.: G05B 15/02

(54) **Elektrohydraulische Steuervorrichtung und Anschlussgehäuse für eine elektrohydraulische Steuervorrichtung**

(30) Priorität: 16.04.2003 DE 20306064 U
(71) Anmelder: HAWE Hydraulik GmbH & Co. KG, 81673 München (DE)
(72) Erfinder: Moh, Wilfried, 69190 Walldorf (DE)
(74) Vertreter: Grünecker, Kinkeldey, Stockmair & Schwanhäusser Anwaltssozietät

(57) **Zusammenfassung**

Eine elektrohydraulische Steuervorrichtung (E), insbesondere für die Mobilhydraulik oder die Industriehydraulik, umfasst eine Baugruppe aus mehreren elektrisch steuerbaren, in Anschlussgehäusen (G) elektrische Anschlüsse aufweisenden Hydraulik-Steuerelementen (V1-V5) und eine wenigstens eine elektrische Schnittstelle (15) aufweisende Steuerelektronik (C), sowie eine zu den Anschlüssen der Hydraulik-Steuerelemente abgedichtet geführte Verkabelung, wobei die Verkabelung (A) mindestens ein umhülltes Vieladerkabel (B) aufweist, das an den Anschlussgehäusen (G) vorbeigeführt ist und aus dem einzelne Kabeladem oder Kabeladerbündel (13) zu den Anschlüssen abgezweigt sind, die in den Anschlussgehäusen (G) abgedichtet platzierte Schneidklemmen (14) für die Kabeladem (13) sind.

## Beschreibung

Die Erfindung betrifft eine elektrohydraulische Steuervorrichtung gemäß Oberbegriff des Anspruchs 1 und ein Anschlussgehäuse für eine elektrohydraulische Steuervorrichtung gemäß Oberbegriff des Anspruchs 16.

Vor allem in der Mobilhydraulik, z.B. an Kränen und anderen Hubvorrichtungen, oder in der Industriehydraulik, beispielsweise an Werkzeugmaschinen oder anderen größeren stationären Aggregaten, werden heutzutage elektrohydraulische Steuervorrichtungen installiert, in denen wenigstens eine Baugruppe aus mehrere Arbeitsorgane betätigenden Hydraulik-Steuerelementen vorgesehen ist. Elektrische oder elektronische Komponenten der oder an den Hydraulik-Steuerelementen werden über eine Steuerelektronik angesteuert und liefern Rückmeldungen in Form elektrischer Signale. Zur Übertragung von Steuerbefehlen oder Rückmeldungen ist eine Verkabelung erforderlich. Die Baugruppen haben unterschiedliche Zusammensetzungen und Größen aus gleichen, ähnlichen oder vollkommen verschiedenen Hydraulik-Steuerelementen, jeweils abhängig vom Einsatzfall. Dies bedeutet, dass praktisch für jeden Einsatzfall eine maßgeschneiderte Verkabelung angefertigt und, den Vorschriften entsprechend, gesichert und in den Anschlussbereichen abgedichtet werden muss. Die Herstellung und Installation der Verkabelungen ist außerordentlich zeitaufwendig und kostenintensiv. Die rapide Entwicklung von Elektronikbaugruppen mit ihren kostengünstigen Einzelteilen ließe immens Bauraum sparen, wenn nicht zum Anschließen der Verkabelung deren Abdichtung und Fixierung voluminöse Gehause erforderlich wären. In diesen Fällen ist die Verkabelung häufig teurer als die Elektronik. Im stationären Maschinenbau werden bereits vorgefertigte, jedoch teure Kabelbäume installiert. Im Computerwesen gibt es einfache, platzsparende und sichere Anschlusssysteme. In der Mobilhydraulik und in der Industriehydraulik werden jedoch nach wie vor maßgeschneiderte Verkabelungen mit hohem Arbeitsaufwand angefertigt, die zu teuren und zu langen Installations- und Fertigstellungszeiten führen. Dabei wird mit sogenannten Würfelsteckern mit Klemmen und einer Einzeldrahtverkabelung gearbeitet, wobei jeder Einzeladeranschluss für sich abgedichtet werden muss. Jede Anschluss- oder Klemmstelle ist jedoch eine akute Fehlerquelle im System.

In einem aus US- A- 5 801 940 bekannten Wohnungs-Heiz-, Ventilations- und Airkonditionierungs-System sind Schnittstellenmodule der unterschiedlichen Aggregate innerhalb des Wohnungsverdrahtungssystems mit einem zentralen Controller verbunden. Zum Anschließen der Module werden Konnektoren verwendet, die sich auf eine isolierte Kabelader aufklemmen lassen und die Isolierung durchtrennen, ohne den innenliegenden Draht abzuschneiden. Auf diese Weise wird jeweils die erforderliche elektrische Verbindung hergestellt.

Weiterer Stand der Technik ist enthalten in EP 0 609 036 A, US 5 887 623 A und GB 2 041 592 A.

Der Erfindung liegt die Aufgabe zugrunde, eine elektrohydraulische Steuervorrichtung sowie ein Anschlussgehäuse für eine elektrohydraulische Steuervorrichtung anzugeben, die eine kostengünstige und vereinfachte Verkabelung ermöglichen, d.h. bei denen der Zeit- und Arbeitsaufwand zum Erstellen und Installieren der Verkabelung reduziert ist, und weniger akute Fehlerstellen bildende Anschlussstellen vorgesehen sind. Im Grunde genommen ist es Teil der Aufgabe, ein adaptierbares System der Verkabelung speziell für die Mobilhydraulik und die Industriehydraulik mit teilweise umfangreichen Baugruppen aus Hydraulik-Steuerelementen zu schaffen, mit dem die große Variationsbreite der Kombinationen der Hydraulikelemente und deren Ansteuerungen bequem und kostengünstig nach einem beliebig modular erweiterbaren Prinzip abdeckbar ist.

Die gestellte Aufgabe wird erfindungsgemäß mit den Merkmalen des Anspruchs 1 und des Anspruchs 16 gelöst.

In Abkehr vom Prinzip der Einzeldrahtverkabelung wird wenigstens ein Vieladerkabel vorgesehen, das eine der Anzahl der entlang des Stranges vorhandenen Anschlüsse entsprechende Anzahl Kabeladem enthält, oder vorzugsweise sogar mehr Kabel-adern als benötigt. Wo Anschlüsse herzustellen sind, sind einzelne Kabel-adern oder Kabeladerbündel aus dem Vieladerkabel abgezweigt und zu den Anschlüssen geführt. In Abkehr von den heutzutage üblichen Würfelsteckern an den Anschlussgehäusen werden die Kabeladern direkt in die Anschlussgehäuse abgedichtet eingeführt, was die Abdichtung vereinfacht und die Durchführungsquerschnitte verkleinern lässt. Die Kabeladern werden erst direkt im Anschlussgehäuse angeschlossen, und zwar mit Hilfe von Schneidklemmen, die bequem und zeitsparend zu bedienen sind und die Kabeladern sicher festlegen. Schneidklemmen sind zwar auf anderen Gebieten der Technik üblich, beispielsweise in der Computertechnik, jedoch vorwiegend zur Übertragung geringer Leistungen und unter sehr sicheren Bedingungen, wohingegen die Schneidklemmen bisher für Hydraulik-Steuerelemente nicht zum Einsatz kamen. Die Verkabelung ist praktisch beliebig modular erweiterbar und maßschneiderbar, wobei beim Erstellen und Installieren der Verkabelung erheblich Zeit und Kosten gespart werden, vor allem wegen des Wegfalls der großbauenden, schweren und teuren Würfelstecker. Da bei der Verkabelung selbst und auch in den Durchführungsbereichen erheblich geringere Querschnitte möglich sind, vor allem wegen Wegfallens schützender und/oder isolierender Umhüllungen einzelner Kabeladern, fällt die installierte Verkabelung sehr kompakt aus.

Das Anschlussgehäuse, das am Hydraulik-Steuerelement angebracht wird und als Anschlussbereich nur wenigstens eine Schneidklemme enthält, lässt sich kompakt gestalten, ist bequem und zeitsparend handhabbar, und ermöglicht einen einfachen und dennoch dichten, kleinquerschnittigen Durchführungsbereich für die jeweilige Kabelader. Die Schneidklemme ist bequem zu handhaben, da nur die Kabelader in die Schneidklemme gedrückt zu werden braucht, um den Anschluss herzustellen und gleichzeitig zu sichern. Hierfür ist deutlich weniger Zeitaufwand als zum Festschrauben von Klemmen erforderlich.

In der Baugruppe werden die Hydraulik-Steuerelemente, fallweise mit eingegliederten Sensoren, in Blockbauweise mit im Wesentlichen in wenigstens einer Reihe ausgerichteten Anschlüssen zusammengefasst. Von dem Vieladerkabel werden die entsprechenden Kabeladem zu den Anschlüssen abgezweigt. Dabei kann ein einziges Vieladerkabel sowohl für die Leistungsanschlüsse als auch die Sensoranschlüsse verwendet werden. Der Vorzug ist jedoch einer Trennung zwischen den Leistungsund den Sensoranschlüssen zu geben, d.h., ein Vieladerkabel für jede Anschlussart vorzusehen und, das Vieladerkabel geschützt in einem Kabelkanal zu verlegen, der Abzweigauslässe zu den Anschlüssen hat.

Hierbei ist es zweckmäßig, einen Kabelkanal für eine Leistungsanschlussreihe und einen getrennten Kabelkanal für die Sensoranschlussreihe vorzusehen. Dies ist günstig wegen einer wünschenswerten Abschirmung.

Der Kabelkanal wird zweckmäßig direkt an den Hydraulik-Steuerelementen oder an den Anschlussgehäusen montiert. Alternativ wäre auch eine Haltestruktur für den jeweiligen Kabelkanal möglich, falls andere Gründe dafür sprechen, den Kabelkanal nicht an den Hydraulik-Steuerelementen festzulegen.

Das System ist besonders zweckmäßig für mobilhydraulische oder industriehydraulische Anwendungsfälle, in denen die Hydraulik-Steuerelemente Steuerventilblöcke sind, die sich bequem in Blockbauweise auf kleinstem Bauraum zusammenfassen lassen, und es ermöglichen, die Verkabelung geschützt und sauber integriert zu installieren.

Ein weitgehend ähnliches Anschlussprinzip der Kabeladem kann auch für die Steuerelektronik verwendet werden, um großbauende und teure Würfelstecker einzusparen. Zweckmäßig werden die Kabeladern in das Gehäuse der Steuerelektronik abgedichtet eingeführt (oder das gesamte, isolierte Vieladerkabel) und direkt an den Schnittstellen angeschlossen. Dadurch entfallen teure und platzbeanspruchende Zwischenglieder. Alternativ kann jedoch, falls der Anwender der elektrohydraulischen Steuervorrichtung andere Vorstellungen haben sollte, das freie Ende des Vieladerkabels mit einem Stecker versehen werden, in welchem die Kabeladern zusammengefasst sind. Als weitere, besonders einfache Alternative kann das Vieladerkabel mit einem freien Kabelschwanz enden, in dem gegebenenfalls sogar die Kabeladem freiliegend enden. Der Anwender hat dann die für ihn zweckmäßigsten Möglichkeiten, die mit der Verkabelung ausgestattete elektrohydraulische Steuervorrichtung zu verwenden.

Bei einer zweckmäßigen Ausführungsform ist die Steuerelektronik in wenigstens einem Gehäuse angeordnet und mit einer Platine ausgestattet, die wenigstens eine die Schnittstellen zum Anschließen von Kabeladern bildende Klemmengruppe trägt. Vorzugsweise werden hier in der Klemmengruppe sogenannte Cage-Clamps vorgesehen, die kleinbauend und sehr sicher sind, und es ermöglichen, die Kabeladem ohne Zwischenglieder direkt anzuschließen. Das Gehäuse benötigt wenigstens eine dichte Durchführung für das isolierte Vieladerkabel oder, zweckmäßiger, für die Kabeladern. Da auch hier teure und platzbeanspruchende Würfelstecker entfallen, kann das Gehäuse der Steuerelektronik so klein sein, dass die elektronischen Komponenten und die Verdrahtung gerade bequem Platz finden. Die Handhabung der Cage-Clamps ist bequem. Die Anschlüsse lassen sich sehr schnell herstellen.

Der Kabelkanal kann auf den Anwendungsfall abgestimmt eine bestimmte Länge haben. Zweckmäßiger ist es jedoch, den Kabelkanal modular aus Kanalabschnitten zusammenzusetzen, so dass mit wenigen Grundelementen an Kanalabschnitten ausgekommen wird und dennoch beliebig lange Kabelkanäle erstellt werden können. Zweckmäßig haben die Kanalabschnitte untereinander gleiche Querschnitte und eine Länge, die jeweils der Breite des zugeordneten Hydraulik-Steuerelements entspricht.

Zweckmäßig ist ein viereckiger, vorzugsweise quadratischer, Querschnitt des Kabelkanals, wobei eine Viereckseite durch eine Montagefahne verlängert ist, mit der sich der Kabelkanal bzw. der Kanalabschnitt festlegen lässt.

Aus Sicherheitsgründen kann es zweckmäßig sein, den Kabelkanal jeweils endseitig durch eine Verschlusskappe zu verschließen, die dann, vorzugsweise, an der Einführseite des Vieladerkabels eine gegebenenfalls sogar dichte Durchführung hat.

Ein weiterer, wichtiger Gesichtspunkt ist es, den jeweils wenigstens einen Abzweigauslass im Kabelkanal oder im Kabelkanalabschnitt bzw. in der Verschlusskappe wahlweise erst durch Ausbrechen eines durch einen Sollbruchbereich in der Wand vorbestimmten Wandteils freizulegen. Der Kabelkanal kann an keine elektrische Anschlüsse benötigenden Hydraulik-Steuerelementen verschlossen vorbeilaufen. Ein Abzweigauslass wird nur dort freigelegt, wo tatsächlich Kabeladern abzuzweigen sind.

Hierbei bietet sich kostengünstig Laserschneiden an, um den Sollbruchbereich mit den Wandteilen leicht ausbrechbar festlegenden Mikrostegen zu formen. Dabei ist es durchaus möglich, den Sollbruchbereich so auszulegen, dass Abzweigauslässe unterschiedlicher Größen oder Formen wahlweise formbar sind, je nachdem, wie viele Kabeladern durch diesen Abzweigauslass abzuzweigen sind.

Das jeweilige Anschlussgehäuse am Hydraulik-Steuerelement sollte eine dichte Durchführung, vorzugsweise gleich für mehrere Kabeladern aufweisen. Diese Durchführung sollte zum Einführen einer größeren Anzahl von Kabeladem ausgelegt sein, damit mit einem Anschlussgehäuse-Typ unterschiedliche Anwendungsfälle mit unterschiedlich vielen Anschlussstellen beherrscht werden.

Besonders zweckmäßig und bequem ist es, am Anschlussgehäuse einen abnehmbaren Gehäuseteil, z.B. Deckel, vorzusehen, um die Kabeladem einführen und in den Schneidklemmen anschließen zu können, und an diesem Gehäuseteil gleich ein Schneidklemmen-Anschließwerkzeug vorzusehen. Denn Schneidklemmen erfordern eine bestimmte Handhabung mit einem Werkzeug, um den Anschluss schnell und sicher herstellen zu können. Wenn dieses Werkzeug gleich an dem Gehäuseteil vorgesehen ist, wird Zeit eingespart. Zweckmäßig ist das Werkzeug sogar fester Bestandteil des abnehmbaren Gehäuseteils, so dass sich der Gehäuseteil mit dem daran angeordneten Werkzeug zum Herstellen der Anschlüsse nutzen lässt, ehe dann der Deckel befestigt wird. Damit wird auch die Sicherheit erhöht, da in der Einbaulage des Gehäuseteils das Werkzeug in einer Haltestellung steht, in der es die angeschlossenen Kabeladern festlegt.

Wie bereits erwähnt, sollte die Anzahl der Kabeladern im Vieladerkabel zweckmäßig so groß sein, dass sich die Verkabelung bei Hinzunahme weiterer und/oder anderer Hydraulik-Steuerelemente problemlos erweitern lässt, wobei bei einer solchen Erweiterung gegebenenfalls bis dahin nichtbenutzte Kabeladern verwendet werden. Der Mehraufwand in machen Einsatzfällen nicht verwendeter Kabeladem ist vernachlässigbar, bietet jedoch den Vorteil, bei einer Erweiterung oder einer Modifizierung der Baugruppe kein neues Vieladerkabel verlegen zu müssen, bzw. mit einem Vieladerkabel universell deutlich verschiedenen Anforderungen gerecht werden zu können.

Zum ordnungsgemäßen Einbringen einer Kabelader in eine Schneidklemme wird üblicherweise ein Werkzeug verwendet, das unter Druck die Kabelader so in die Schneidklemme zwingt, dass die Isolierung durchtrennt und/oder verdrängt wird und mehrere Kontaktübergänge hergestellt werden. Damit dieses Werkzeug beim Erstellen der Verkabelung auch stets zur Hand ist, ist nach einem weiteren, wichtigen Aspekt der Erfindung an einem abnehmbaren Anschlussgehäuseteil, vorzugsweise einem Deckel, gleich das Werkzeug angeordnet, das dann entsprechend benutzt werden kann.

Dabei kann das Werkzeug abnehmbar an dem Anschlussgehäuseteil vorgesehen sein, so dass es zur Manipulation einfach zu handhaben ist. Zweckmäßig wird das Werkzeug sogar unverlierbar angebracht, um es nicht aus Versehen für eine spätere Handhabung zu verlieren. Noch vorteilhafter ist das Werkzeug an dem Gehäuseteil so positioniert, dass es mit dem Gehäuseteil zum Herstellen der Anschlussverbindung nutzbar ist. Dies erlaubt eine sehr bequeme Handhabung selbst bei einem tiefen Anschlussgehäuse.

Bei einer besonders zweckmäßigen Ausführungsform ist das Werkzeug mit dem Gehäuseteil einstückig. Das Werkzeug umfasst Einzelwerkzeuge, die in der Anordnung und Anzahl auf die Anordnung und Anzahl der Schneidklemmen im Anschlussgehäuse angepasst ist, oder sogar mehr Einzelwerkzeuge als benötigt umfasst, um auch für ein anderes Anschlussgehäuse benutzt werden zu können.

Nach einem weiteren, wichtigen Gedanken ist das Werkzeug in der Einbaulage des Gehäuseteils in einem Kabelader-Halteeingriff mit der Schneidklemme, so dass es eine zusätzliche Sicherung für die festgelegten Kabeladern bildet und somit die fallweise bei Schneidklemmen verwendeten, nachträglich aufgebrachten und relativ schwierig wieder abnehmbaren Sicherungskappen ersetzen kann.

Eine einfache und dichte Kabeladerdurchführung wird mittels einer Dichtung unter einem Deckel des Gehäuses und einer Gegendichtung bei der Durchführung im Gehäuse erzielt, sobald der Deckel ordnungsgemäß nach dem Einführen der Kabeladern angebracht wird.

Ausfuhrungsformen des Erfindungsgegenstandes werden anhand der Zeichnungen erläutert. Es zeigen:
- Fig. 1: eine schematische Darstellung einer elektrohydraulischen Steuervorrichtung mit einer neuartigen Verkabelung,
- Fig. 2: eine perspektivische Explosionsdarstellung eines Kabelkanals,
- Fig. 3: eine perspektivische Explosionsdarstellung eines Anschlussgehäuses,
- Fig. 4: eine Perspektivansicht einer Schneidklemmenanordnung, und
- Fig. 5: eine Seitenansicht und eine Frontansicht einer Cage-Clamp zum Herstellen mehrerer Kabelader-Anschlüsse.

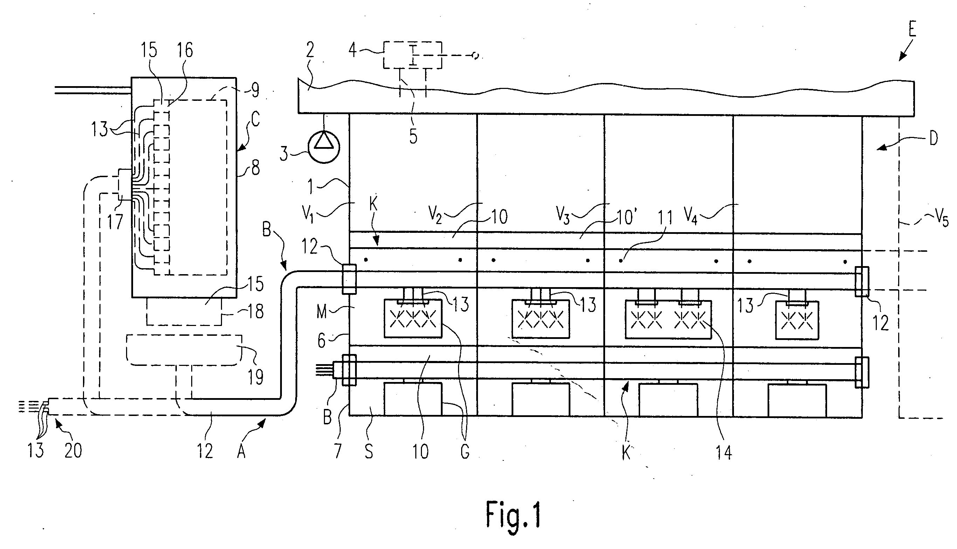

Fig. 1 verdeutlicht eine elektrohydraulische Steuervorrichtung E beispielsweise für einen Kran oder Mobilkran, die in einer in Blockbauweise zusammengefassten Baugruppe D mehrere Hydraulik-Steuerelemente V1 bis V5 umfasst, beispielsweise Magnetsteuerventile mit Sensoren, die mit ihren Gehäuseblöcken 1 aneinander oder beabstandet an beispielsweise einer Grundplatte 2 montiert sind. Mit den Hydraulik-Steuerelementen V1 bis V5 werden beispielsweise hydraulische Verbraucher 4 über Leitungen 5 aus einer Druckquelle 3 gesteuert. Jedes Hydraulik-Steuerelement V1 bis V5 weist in der gezeigten Ausführungsform einen Gehäuseteil 6 mit einem Magneten M und einen Gehäuseteil 7 mit einem elektronischen Sensor S auf. Die Magneten M und Sensoren S haben elektrische Anschlüsse, die durch Schneidklemmen 14 gebildet sind.

Unter dem Ausdruck Schneidklemme ist ein sogenannter Steckverbinder der Schneid-/Klemmtechnik mit einem Isolationsverdrängungsprinzip (IDC) für eine schnelle, sichere und rationelle Herstellung elektrischer Kabelader-Anschlüsse gemeint (Mass Terminated Conector). Schneidklemmen werden beispielsweise vorwiegend in der Computertechnik benutzt.

Die Baugruppe D ist beispielsweise an eine Steuerelektronik C elektrisch angeschlossen, die ein Anschlussgehäuse 8 und im Anschlussgehäuse eine Platine 9 mit nicht hervorgehobenen elektronischen Komponenten enthält, und beispielsweise als Knoten in einem CAN-System ausgebildet ist. Die Steuerelektronik C steuert die Magneten M elektrisch an und empfängt Signale der Sensoren S, die sie entweder verarbeitet und weiterleitet.

Die Baugruppe D ist mit der Steuerelektronik C über eine Verkabelung A verbunden, die wenigstens ein Vieladerkabel B mit einer Isolierung und einer Vielzahl innen liegender, isolierter Kabeladern 13 aufweist.

Obwohl die Magneten M und die Sensoren S an ein gemeinsames Vieladerkabel B angeschlossen werden könnten, ist einer Lösung Vorzug zu geben, bei der für die Magneten M und die Sensoren S mindestens zwei getrennte Vieladerkabel B vorgesehen sind (wie gezeigt).

Das Vieladerkabel B ist an der Baugruppe D in einem Kabelkanal K geschützt untergebracht, der sich quer über alle Hydraulik-Steuerelemente V1 bis V5 erstreckt und beispielsweise an diesen mit Hilfe von Befestigungsöffnungen 11 festgelegt ist. Der Kabelkanal kann maßgeschneidert auf die Baugruppe D abgestimmt und einstückig ausgebildet sein. Der Vorzug ist jedoch einem Kabelkanal K zu geben, der aus einzelnen Kabelkanalabschnitten 10, 10' und dgl. zusammengesetzt ist, die stumpf aneinander stoßen und deren jeder so lang ist wie die Breite des zugeordneten Hydraulik-Steuerelements V1 bis V5. Die Enden des Kabelkanals K können durch Verschlusskappen 12 gesichert sein, wobei die Verschlusskappe 12, durch die das Vieladerkabel B eingeführt wird, einen entsprechenden Auslass besitzt.

An jedem elektrisch anzuschließenden Hydraulik-Steuerelement V1 bis V5 ist ein Anschlussgehäuse G vorgesehen, in dem die entsprechende Anzahl der Schneidklemmen 14 geschützt untergebracht ist. Von dem Vieladerkabel B zweigen Einzeladern 13 aus dem Kabelkanal K zu dem jeweiligen Anschlussgehäuse G ab, die an den Schneidklemmen 14 angeschlossen sind. Die Durchführungen der Kabeladern in den Anschlussgehäusen G sind dicht ausgebildet.

Bei der gezeigten Ausführungsform sind Anschlussgehäuse G die Leistungsversorgung der Magneten M und Anschlussgehäuse G für die Sensoren S voneinander getrennt vorgesehen, die an zwei Vieladerkabel B in jeweils einem Kabelkanal angeschlossen sind.

Für das andere Ende des Vieladerkabels B kommen verschiedene Ausführungsarten in Betracht (gestrichelt angedeutet). Für den Fall, dass beispielsweise die elektrohydraulische Steuervorrichtung mit der Steuerelektronik C fertiggestellt geliefert und eingebaut wird, empfiehlt es sich, die Einzeladern des Vieladerkabels B an Schnittstellen 15 an der Platine 9 im Anschlussgehäuse 8 der Steuerelektronik C anzuschließen, beispielsweise in dem das Vieladerkabel B mit seiner Isolierung 12 bis in eine dichte Durchführung 17 am Anschlussgehäuse 8 verläuft und die Kabeladem 13 im Inneren des Anschlussgehäuses 8 aufgefächert und an den Schnittstellen 15 angeschlossen sind. Zweckmäßig werden die Schnittstellen 15 von sogenannten Cage-Clamps 16 gebildet, die eine sichere und rasche und rationelle Herstellung der Anschlussverbindungen ermöglichen. Das Anschlussgehäuse 8 braucht nur so groß zu sein, dass es die Steuerelektronik und die aufgefächerten Kabeladern 13 aufzunehmen vermag.

Als Alternative ist gestrichelt angedeutet, dass die Schnittstellen 15 in einem am Anschlussgehäuse 8 zugänglichen Steckteil 18 zusammengefasst sind, auf das ein die Kabeladem 13 des Vieladerkabels B zusammenfassender Stecker 19 passt.

Als weitere Alternative kann das Vieladerkabel B auch mit einem freien Kabelschwanz 20 enden, an dem gegebenenfalls die Kabeladern 13 frei liegen, so dass der Anwender der elektrohydraulischen Steuervorrichtung die Anschlüsse wie gewünscht gestalten kann.

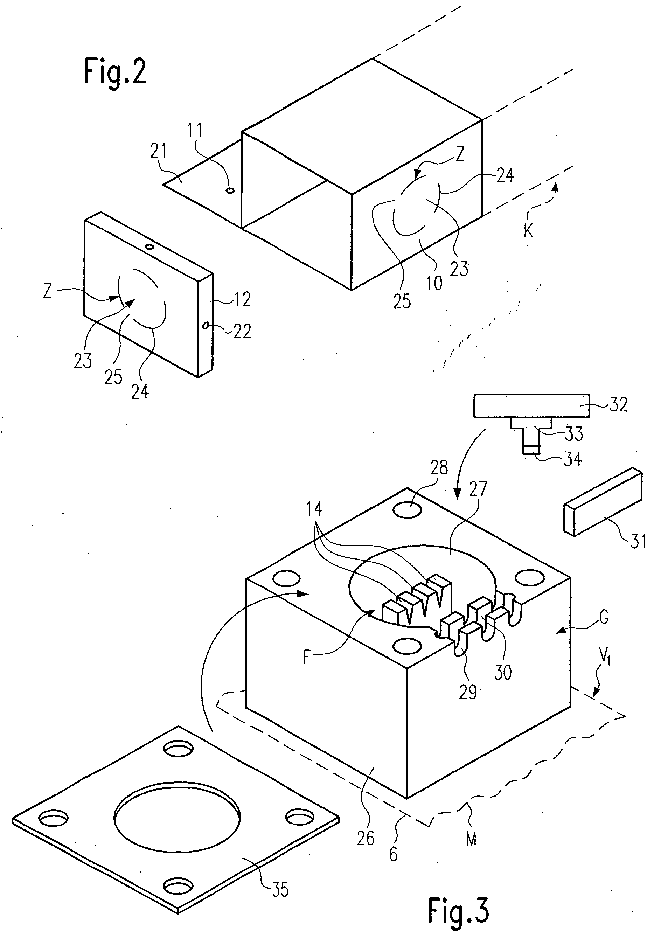

Fig. 2 verdeutlicht den Aufbau des Kabelkanals K aus den einzelnen Kabelkanalabschnitten, von den der Kabelkanalabschnitt 10 gezeigt ist. Der Kabelkanalabschnitt 10 hat einen beispielsweise viereckigen oder quadratischen Querschnitt, wobei eine Viereckseite zu einer Montagefahne 21 verlängert ist, in der die Befestigungsöffnungen 11 vorgesehen werden. Die Verschlusskappe 12 ist beispielsweise ein Stülpdeckel mit randseitigen Befestigungsöffnungen 22 und einem Auslass Z, der wahlweise ausbrechbar ist, in dem in der Wand der Verschlusskappe ein Sollbruchbereich 24 geformt ist, der einen Wandteil 23 nur mit Mikrostegen 25 festhält. Es können mehrere solcher Sollbruchbereiche 24 geformt werden, um einen Auslass beliebiger Größe oder Form bedarfsabhängig bilden zu können.

Zum Bilden eines Abzweigauslasses Z aus dem Kabelkanalabschnitt 10 ist ebenfalls mindestens ein Sollbruchbereich 24 vorgeformt, der den Wandbereich 23 nur mehr mit Mikrostegen 25 festhält, so dass der Wandbereich 23 bei Bedarf leicht herausgebrochen werden kann. Hierbei bietet es sich an, den Kabelkanal K bzw. jeden Abschnitt 10, 10' aus Blech oder Kunststoff auszubilden und die Auslässe Z durch Laserschneiden zu formen.

Fig. 3 verdeutlicht eine Ausführungsform eines Anschlussgehäuses G mit seinen Bestandteilen. Das Anschlussgehäuse G wird auf dem gestrichelt angedeuteten Hydraulik-Steuerelement V1, beispielsweise auf dem Gehäuseteil 6, festgelegt und enthält in einem beispielsweise aus Kunststoff bestehenden Grundkörper 26 einen innenliegenden Hohlraum 27, in dem die Schneidklemmen 14 angeordnet sind, beispielsweise zusammengefasst in einem Schneidklemmenkörper F. Die Schneidklemmen 14 sind an einer vorbestimmten Position im Hohlraum 27 platziert. Zur Durchführung der Kabeladern sind am oberen Gehäuserand Durchführungs-Ausschnitte 29 geformt, zwischen denen ein Hohlraum 30 ausgespart ist, in den ein Dichtelement 31 eingesetzt wird, auf dem die eingeführten Kabeladern 13 aufliegen. Darauf wird eine Dichtung 35 gelegt, ehe ein abnehmbarer Deckel 32 aufgebracht und mittels im Grundkörper 26 vorgesehener Bohrungen 28 festgelegt wird. Die Bohrungen 28 dienen auch zum Festlegen des Anschlussgehäuses G selbst.

Am Deckel 32 ist ein Kabeladem-Anschließwerkzeug 33, beispielsweise mit mehreren Einzelwerkzeugen 34, vorgesehen, zweckmäßigerweise einstückig angeformt. Das Werkzeug 33 ist zweckmäßig so positioniert, dass es mit der Hand benutzbar ist, um die eingeführten Kabeladern in die Schneidklemmen 14 zu pressen und, gegebenenfalls, in der Einbaulage des Deckels 32 die festgelegten Kabeladern zu sichern, d.h. in einen Sicherungseingriff mit den Schneidklemmen 14 zu treten.

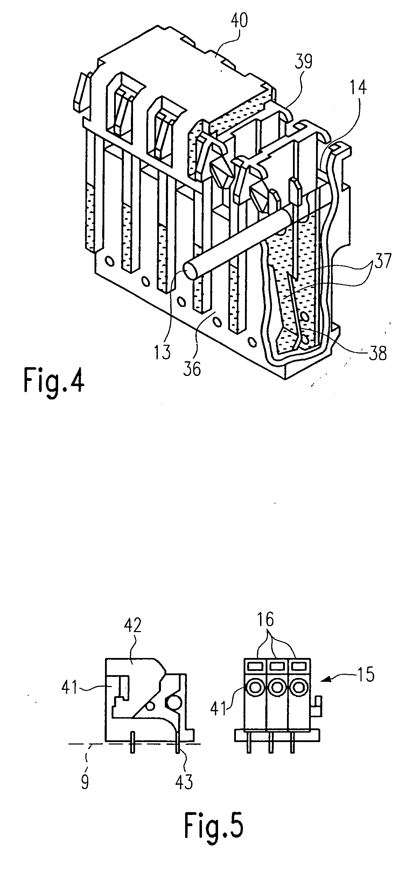

Eine Ausführungsform der Schneidklemmen 14 ist in Fig. 4 ersichtlich. In einem Grundkörper 36 sind mehrere Schneidklemmenkontaktpaare 37 voneinander getrennt mit jeweils einem nach oben offenen Maul angeordnet, in das die Kabelader 13 eingelegt und durch Druck unter Durchtrennen oder Verdrängung der Isolierung in die Anschlussposition gebracht wird. Hierbei kann das Werkzeug 33 von Fig. 3 benutzt werden. Am Grundkörper 36 sind ferner Zugausgleichselemente 39 angeformt. Falls das Werkzeug 33 nicht vorgesehen ist, kann, falls erforderlich, eine Sicherungskappe 40 aufgebracht werden. Die Kontakt- und Schneidzungen 37 sind bei 38 fixiert und an nicht gezeigte Verbindungselemente, z.B. Stifte, geschlossen.

Die in Fig. 5 gezeigten Cage-Clamps 16 der Schnittstellen 15 der Steuerelektronik von Fig. 1 sind handelsübliche Anschlusselemente, die mit Kontaktbeinen 43 an der gestrichelt angedeuteten Platine 9 festlegbar und an weiterführende Leiter anschließbar sind. Jede Cage-Clamp besitzt einen Einlass 41 für eine Kabelader und ein mittels eines Werkzeuges oder mit der Hand schwenkbewegliches Verriegelungsteil 42 zum Fixieren des Anschlusses.

## Patentansprüche

1. Elektrohydraulische Steuervorrichtung (E), insbesondere für die Mobilhydraulik oder die Industriehydraulik, mit einer Baugruppe aus mehreren elektrisch steuerbaren, in Anschlussgehäusen (G) elektrische Anschlüsse aufweisenden Hydraulik-Steuerelementen (V1 - V5) und wenigstens einer elektrische Schnittstellen (15) aufweisenden Steuerelektronik (C) und einer zu den Anschlüssen der Hydraulik-Steuerelemente (V1 - V5) abgedichtet geführten Verkabelung (A), **dadurch gekennzeichnet, dass** die Verkabelung (A) mindestens ein umhülltes Vieladerkabel (B) aufweist, das an den Anschlussgehäusen (G) vorbeigeführt ist und aus dem einzelne Kabeladern oder Kabeladerbündel (13) zu den Anschlüssen abgezweigt sind, und dass die Anschlüsse in den Anschlussgehäusen (G) abgedichtet platzierte Schneidklemmen (14) für die Kabeladem (13) sind.

2. Elektrohydraulische Steuervorrichtung nach Anspruch 1, **dadurch gekennzeichnet, dass** die Hydraulik-Steuerelemente (V1 - V5), gegebenenfalls mit elektrische Anschlüsse in Anschlussgehäusen (G) aufweisenden, eingegliederten Sensoren (S), in der Baugruppe (D) in Blockbauweise mit im Wesentlichen in wenigstens einer Reihe ausgerichteten Anschlüssen zusammengefasst sind, und dass, vorzugsweise bei jeder Anschlussreihe, wenigstens ein das Vieladerkabel (B) enthaltender Kabelkanal (K) mit Abzweigauslässen (Z) für Kabeladem (13), vorzugsweise an der Baugruppe (D), montiert ist.

3. Elektrohydraulische Steuervorrichtung nach Anspruch 2, **dadurch gekennzeichnet, dass** die Hydraulik-Steuerelemente (V1 - V5) getrennte Leistungsanschlüsse und Sensoranschlüsse aufweisen, und dass ein Kabelkanal (K) mit einem Vieladerkabel (B) für die Leistungsanschlussreihe und ein Kabelkanal (K) mit einem weiteren Vieladerkabel (B) für die Sensoranschlussreihe vorgesehen sind.

4. Elektrohydraulische Steuervorrichtung nach Anspruch 2, **dadurch gekennzeichnet, dass** der Kabelkanal (K) direkt an den Hydraulik-Steuerelementen (V1 - V5), oder an einer Haltestruktur oder an den die Schneidklemmen (14) enthaltenden Anschlussgehäusen (G) montiert ist.

5. Elektrohydraulische Steuervorrichtung nach wenigstens einem der vorhergehenden Ansprüche, **dadurch gekennzeichnet, dass** die Hydraulik-Steuerelemente (V1 - V5) Steuerventilblocke (1), vorzugsweise mit Betätigungsmagneten (M) und Sensoren (S), sind.

6. Elektrohydraulische Steuervorrichtung nach Anspruch 1, **dadurch gekennzeichnet, dass** die Steuerelektronik (C) bei oder getrennt von der Baugruppe (D) in einem Gehäuse (8) angeordnet ist, und dass die Kabeladern (13) des Vieladerkabels (B) abgedichtet im Gehäuse an Schnittstellen (15) angeschlossen sind.

7. Elektrohydraulische Steuervorrichtung nach Anspruch 1, **dadurch gekennzeichnet, dass** die Steuerelektronik (C) bei oder getrennt von der Baugruppe (D) in einem Gehäuse (8) angeordnet ist, und dass die Kabeladern (13) des Vieladerkabels (B) in einem Anschlussstecker (19) angeschlossen und zusammengefasst sind oder in einem Kabelschwanz (20) freiendend belassen sind.

8. Elektrohydraulische Steuervorrichtung nach Anspruch 1, **dadurch gekennzeichnet, dass** die Steuerelektronik (C) in dem wenigstens einen Gehäuse (8) eine Platine (9) aufweist, dass die Platine (9) wenigstens eine die Schnittstellen (15) für Kabel-adern (13) bildende Klemmengruppe trägt, vorzugsweise wenigstens eine Reihe Cage-Clamps (16), und dass das Gehäuse (8) wenigstens eine dichte Durchführung (17) für das Vieladerkabel (B) oder dessen Kabeladern (13) aufweist.

9. Elektrohydraulische Steuervorrichtung nach Anspruch 2, **dadurch gekennzeichnet, dass** der Kabelkanal (K) aus Kanalabschnitten (10, 10', 10") zusammengesetzt ist, vorzugsweise aus Kanalabschnitten (10, 10', 10") mit gleichen Querschnitten und den Breiten der jeweiligen Hydraulik-Steuerelemente (V1 - V5) entsprechenden Längen.

10. Elektrohydraulische Steuervorrichtung nach Anspruch 9, **dadurch gekennzeichnet, dass** der Querschnitt des Kabelkanals (K) viereckig, vorzugsweise quadratisch, ist, und dass eine Viereckseite durch eine Montagefahne (21) verlängert ist.

11. Elektrohydraulische Steuervorrichtung nach Anspruch 9, **dadurch gekennzeichnet, dass** sich der Kabelkanal (K) zumindest über die Länge der Baugruppe (D) erstreckt und jeweils endseitig durch eine Verschlusskappe (12) verschlossen ist.

12. Elektrohydraulische Steuervorrichtung nach Anspruch 2, **dadurch gekennzeichnet, dass** jeder Abzweigauslass (Z) im Kabelkanal (K) bzw. im Kabelkanalabschnitt (10, 10', 10") bzw. in der Verschlusskappe (12) durch wahlweises Ausbrechen eines durch einen Sollbruchbereich (24) vorbestimmten Wandteils (23) freilegbar ist, vorzugsweise eines durch Laserschneiden mit belassenen Mikrostegen (25) geformten Sollbruchbereichs (24).

13. Elektrohydraulische Steuervorrichtung nach Anspruch 1, **dadurch gekennzeichnet, dass** das Anschlussgehäuse (G) eine dichte Durchführung (29, 31), vorzugsweise für mehrere Kabeladern (13), aufweist.

14. Elektrohydraulische Steuervorrichtung nach Anspruch 1, **dadurch gekennzeichnet, dass** das Anschlussgehäuse (G) einen abnehmbaren Deckel (32) mit einem am Deckel (32) vorgesehenen Schneidklemmen-Anschließwerkzeug (33) aufweist.

15. Elektrohydraulische Steuervorrichtung nach wenigstens einem der vorhergehenden Ansprüche, **dadurch gekennzeichnet, dass** das Vieladerkabel (B) zum wahlweisen modularen Erweitern der Verkabelung (A) eine gegenüber der Anzahl vor der Erweiterung vorgesehener Anschlüsse größere Anzahl Kabeladern (13) aufweist.

16. Anschlussgehäuse (G), insbesondere für ein Hydraulik-Steuerelement (V1 - V5) oder einen Sensor (S), **dadurch gekennzeichnet, dass** in dem Anschlussgehäuse (G) wenigstens eine Schneidklemme (14) als Anschluss einer Kabelader (13) festgelegt ist.

17. Anschlussgehäuse nach Anspruch 16, **dadurch gekennzeichnet, dass** an einem abnehmbaren Anschlussgehäuseteil (32), vorzugsweise einem Deckel, ein Schneidklemmen-Anschließwerkzeug (33) angeordnet ist.

18. Anschlussgehäuse nach Anspruch 17, **dadurch gekennzeichnet, dass** das Werkzeug (33), vorzugsweise unverlierbar, abnehmbar, am Anschlussgehäuseteil (32) vorgesehen ist.

19. Anschlussgehäuse nach Anspruch 17, **dadurch gekennzeichnet, dass** die wenigstens eine Schneidklemme (14) im Anschlussgehäuse (G) derart positioniert ist, dass das an dem Anschlussgehäuseteil (32) angebrachte Schneidklemmen-Anschließwerkzeug (33) mit dem Gehäuseteil (32) in eine Anschließstellung in die Schneidklemme (14) bewegbar ist.

20. Anschlussgehäuse nach Anspruch 19, **dadurch gekennzeichnet, dass** das Werkzeug (33) mit dem Gehäuseteil (32) einstückig ausgebildet ist und in Anzahl und Anordnung auf die Anzahl und Anordnung der Schneidklemmen (14) angepasste Einzelwerkzeuge (34) umfasst.

21. Anschlussgehäuse nach Anspruch 19, **dadurch gekennzeichnet, dass** das Werkzeug (33) in der Einbaulage des Gehäuseteils (32) in einem Kabelader-Halteeingriff mit der Schneidklemme (14) ist.

22. Anschlussgehäuse nach wenigstens einem der vorhergehenden Ansprüche 16 bis 21, **dadurch gekennzeichnet, dass** der Gehäuseteil (32) ein Deckel ist, der am Gehäuse dicht festlegbar ist, vorzugsweise unter Zwischenlage einer Dichtung (35), und dass im Gehäuse (G) bei der Durchführung (29) eine Gegendichtung (31) vorgesehen ist, die zusammen mit dem Dichtelement (35) die dichte Kabelader-Durchführung, vorzugsweise für mehrere Kabeladern (13), bildet.
